# EUROPÄISCHE PATENTSCHRIFT

(11) **EP 1 621 250 B1**
(45) Veröffentlichungstag und Bekanntmachung des Hinweises auf die Patenterteilung: **02.01.2013**
(21) Anmeldenummer: 05015536.5
(22) Anmeldetag: 18.07.2005
(51) Int. Cl.: B01J 19/24, B01J 8/02, B01J 19/32

(54) **Reaktor zur Durchführung von Reaktionen mit starker Wärmetönung und Druckaufkommen**
Reactor for performing strong exothermic reactions with pressure increase
Réacteur pour réalisation de réactions fortement exothermiques avec augmentation de pression

(30) Priorität: 29.07.2004 DE 102004036695
(43) Veröffentlichungstag der Anmeldung: 01.02.2006
(73) Patentinhaber: ITS Reaktortechnik GmbH, 82049 Pullach (DE)
(72) Erfinder: Heisel, Michael, Dr., 82049 Pullach (DE); Daun, Klaus-Dieter, 45289 Essen (DE); Marold, Freimut, 71093 Weil im Schönbuch (DE)
(74) Vertreter: Best, Michael

(56) Entgegenhaltungen:
- EP-A- 1 002 571
- EP-A- 1 153 653
- WO-A1-2005/063616
- DE-A1- 19 952 964
- DE-C1- 10 046 691
- US-A- 4 544 544

## Beschreibung

Die Erfindung betrifft einen Reaktor zur Durchführung von Reaktionen mit starker Wärmetönung, bei dem die Reaktion an Katalysatormaterial zwischen gekühlten Trennwänden in mindestens einem Reaktorbehälter abläuft. Erfindungsgemäß können die Module, die die Trennwände enthalten, mit einem vorbestimmten Druck beaufschlagt werden, und der erfindungsgemäße Reaktor ist daher insbesondere zur Durchführung von Reaktionen geeignet, bei denen nicht nur erhebliche Wärmemengen zu- oder abgeführt werden müssen, sondern darüber hinaus auch noch unter erhöhtem Druck gearbeitet wird.

Bei katalysierten Reaktionen mit starker Wärmetönung wird häufig die Reaktionswärme über einen Wärmeträger abgeführt oder zugeführt, der durch plattenförmige sogenannte Thermobleche geleitet wird.

Thermobleche bestehen aus Wärmeüberträgerplatten, deren einzelne, meistens zwei, Bleche durch Punkt- und/oder Rollschweißungen miteinander verbunden und häufig unter Verwendung hydraulischen Drucks plastisch unter Kissenbildung ausgeformt sind. Derartige Thermobleche sind im Stand der Technik bekannt, z.B. aus der DE-A 101 08 380.

Auch Plattenreaktoren zur Durchführung von katalysierten Reaktionen sind bekannt. So offenbart die US-A 4,544,544 einen zylinderförmigen Reaktor, der durch parallele Platten und durch durchlässige Abschlüsse in Reaktionsräume aufgeteilt wird, die mit Katalysator gefüllt sind. Die parallelen Platten werden von einem Kühlmittel durchflossen. Die Anordnung der Reaktionsräume und der parallelen Wärmeaustauscherplatten ist derart, daß ein Gas zunächst in einen Reaktionsraum eintritt und nacheinander zwischen den Wärmeleitplatten hindurch in weitere, sich jeweils zwischen zwei Wärmeplatten befindende Reaktionsräume geleitet wird.

Aus der US-A 3,127,247 ist ein Reaktor bekannt, der einen vertikalen, zylindrischen Behälter umfaßt. In diesem zylindrischen Behälter befinden sich mehrere konzentrische Hohlräume, welche von zylindrischen Platten begrenzt sind, die von Kühlmittel durchflossen werden können. Die ringförmigen Hohlräume werden mit Katalysator befüllt, wodurch kühlbare, als konzentrische Ringe angeordnete Reaktionsräume in dem Reaktor vorliegen. Die Wände dieser Hohlräume sind fest mit dem Boden und dem Deckel des Reaktors verbunden.

Aus der Zeitschrift "Hydrocarbon Processing", März 1997, Seite 134 ist ein Röhrenreaktor mit Katalysatorpartikeln in den Rohren bekannt. Die Rohre werden auf der Mantelseite des Reaktors mit siedendem Wasser oder anderen geeigneten Wärmeträgern gekühlt.

Reaktoren zur Durchführung von Partialoxidationen unter Verwendung von Thermoblechen sind auch in der DE-A 199 52 964, der DE-C 197 54 185, der DE-A 198 48 208 und der WO-A 01/85331 beschrieben.

Besonders vorteilhafte Plattenreaktoren sind auch in der EP-A 1 002 571 beschrieben, die einen Reaktor zur Durchführung von Reaktionen mit starker Wärmetönung betrifft. Bei den dort beschriebenen Reaktoren werden mehrere Thermobleche, zwischen die Katalysatorpartikel eingebracht werden können, nebeneinander im Reaktorbehälter so angeordnet, so daß sie ein Modul aus Plattenpaketen bilden, in dem die Plattenpakete parallel vom Einsatzgas durchströmt werden. Ein derartiger modularer Aufbau hat bei der Reaktionsführung Vorteile. Allgemein gilt insbesondere auch bei Plattenreaktoren, daß ein Druckgefälle zwischen Gaseintritt und -austritt erforderlich ist, um die Durchströmung der Katalysatorschüttung mit dem Prozeßgas zu bewirken. Dieses Druckgefälle kann z.B. durch einen Überdruck am Eintritt aber auch durch Unterdruck am Austritt oder einer Kombination dieser beiden Maßnahmen aufgeprägt werden. Bei der technischen Anwendung liegt einerseits ein Druckgefälle über die Katalysatorschüttung vor, andererseits aber auch ein Druckunterschied zwischen dem Inneren des Reaktorraumes und der Umgebung des Reaktorraumes. Bei Plattenreaktoren kann die Druckdifferenz zwischen dem Druck innerhalb der Plattenpakete und dem Druck in der Umgebung der Plattenpakete durchaus bis zu 1 bar und in Einzelfällen auch mehr betragen.

Bei Rohrreaktoren mit einer zylindrischen Ausführung der druckbeaufschlagten Wände ist dies weniger problematisch als bei Plattenreaktoren mit Thermoblechen mit im wesentlichen ebenen Wänden. Hier kann es insbesondere bei hohen Temperaturen zu Verformungen insbesondere der Wandungen eines Plattenpakets bzw. eines Thermoblechmoduls kommen, wobei die äußeren Wandungen eines Thermoblechmoduls häufig auch wieder durch Thermobleche gebildet werden. Diese Schwierigkeiten sind auch deshalb schwer in den Griff zu bekommen, da der Druckunterschied zwischen dem Inneren der Plattenpakete und dem Äußeren der Plattenpakete während einer Reaktion nicht notwendigerweise konstant ist, sondern Druckspitzen auftreten können.

Aufgabe der Erfindung ist es, einen Reaktor mit Thermoblechen zur Verfügung zu stellen, der für großtechnische Verfahren geeignet ist und die vorstehenden Probleme nicht aufweist. Insbesondere soll der Reaktor die Plattenpakete auch dann zuverlässig druckentlasten, wenn während der Reaktionsführung Druckspitzen auftreten und dies soll auf technisch möglichst einfache Art und Weise ohne aufwändige Regelungsmechanismen erfolgen.

Die Aufgabe wird durch den Gegenstand der Patentansprüche gelöst.

Die Erfindung betrifft damit einen Reaktor wie er in Anspruche beschrieben wird.

Die Erfindung betrifft ebenfalls ein Verfahren zur Durchführung einer Reaktion mit starker Wärmetönung, wobei die Reaktion in den Spalten zwischen den Thermoblechen eines derartigen Reaktors durchgeführt wird, die mit festem Katalysator gefüllt sind.

Der erfindungsgemäße Reaktor hat neben einer hervorragenden Stabilität auch bei Reaktionen, die unter erhöhtem Druck ablaufen, ebenfalls den Vorteil, daß er sich besonders gut befüllen und entleeren läßt, und die Erfindung betrifft auch ein Verfahren zum Befüllen und Entleeren eines derartigen Reaktors.

Der erfindungsgemäße Reaktor weist Thermoblechmodule auf, die wiederum aus Thermoblechen gebildet sind, durch die ein Wärmeträger strömt, der die Reaktionswärme aufnimmt bzw. dem System Wärme zuführt. Die Thermoblechmodule sind bevorzugt quaderförmig ausgebildet und druckentlastend in einer dieselben vollständig umgebenden, überwiegend zylinderförmigen Hülle eingebracht.

Die genaue Ausgestaltung der Thermobleche und der Thermoblechmodule ist aus dem in der Einleitung diskutierten Stand der Technik bekannt. Werkstoffe, Materialstärken, Bemessungen etc. der Thermobleche und der Thermoblechmodule sind nicht besonders eingeschränkt und richten sich nach dem gewünschten Einsatzzweck.

Zwei rechteckige Bleche sind an ihren Längs- und Stirnseiten zu einem Thermoblech verbunden, wobei eine Rollnaht, Lasernaht oder seitliches Zuschweißen oder eine Kombination davon möglich ist. Der Raum, in dem sich später der Wärmeträger befindet, muß vollständig dicht sein. Über die Rechteckfläche verteilt werden die Bleche miteinander durch Punktschweißung oder durch Rollnähte verbunden. Auch die Unterteilung des vom Wärmeträger durchströmten Volumens in mehrere miteinander verbundene Bereiche durch zusätzliche Rollnähte ist möglich.

Die Anordnung der Schweißpunkte auf den Thermoblechen ist bekannt und ist erfindungsgemäß nicht besonders eingeschränkt.

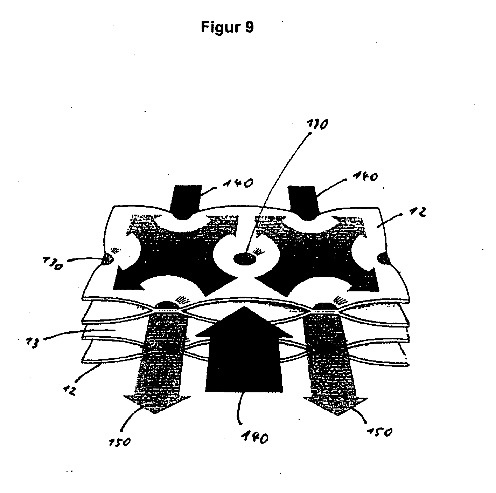

Für die Außenwände der Thermobleche ergibt sich damit häufig eine in etwa kissenförmige Ausgestaltung, wie sie schematisch in Figur 9 gezeigt ist. Im Rahmen dieser Beschreibung werden auch derartige kissenförmige Thermobleche als im wesentlichen eben angesehen, und in einer bevorzugten Ausführungsform bildet ein Thermoblech eine Außenhülle eines Thermoblechmoduls und kann daher eine im wesentlichen ebene Außenwand bilden, auch wenn die Außenwand eine gewisse Kissenstruktur aufweist, wie sie z.B. in Figur 9 gezeigt wird. Stärker bevorzugt ist jedoch, daß die Außenwände der Thermobleche so eben wie möglich ausgestaltet sind, mit Unterschieden zwischen dem höchsten und dem tiefsten Punkt der Ebene von bevorzugt nicht mehr als 30 mm, stärker bevorzugt nicht mehr als 20 mm, stärker bevorzugt nicht mehr als 10 mm, noch stärker bevorzugt nicht mehr als 5 mm, insbesondere nicht mehr als 3 oder 2 oder 1 oder 0,5 mm. Wenn die Thermobleche im wesentlichen eben ausgestaltet sind, kann der Reaktionsverlauf durch eine genauere Temperatursteuerung besser kontrolliert werden.

Bei den erfindungsgemäßen Reaktoren wird von den bekannten Vorteilen der Thermoblechmodule Gebrauch gemacht, die einzeln auswechselbar sind, beispielsweise bei Leckagen und Verformungen oder auch zum Befüllen und Entleeren.

Erfindungsgemäß können die Thermoblechmodule von einem rechteckigen Stabilisierungskasten begrenzt sein, der dann einen Bestandteil des Thermoblechmoduls bildet. Sofern im Rahmen dieser Beschreibung von den im wesentlichen ebenen Seitenwänden eines Thermoblechmoduls gesprochen wird, sind damit sowohl die im wesentlichen ebenen Wände eines derartigen rechteckigen Stabilisierungskastens (der optional vorhanden ist) gemeint als auch die äußeren Wände des Thermoblechmoduls ohne einen rechteckigen Stabilisierungskasten. Falls ein rechteckiger Stabilisierungskasten vorhanden ist, der so angebracht ist, daß zwischen den Innenwänden des rechteckigen Stabilisierungskastens und den Halteböden des Thermoblechmoduls bzw. den äußeren Thermoblechen des Thermoblechmoduls Zwischenräume vorhanden sind, kann die Druckbeaufschlagung bevorzugt so erfolgen, daß sowohl die äußeren Wände des rechteckigen Stabilisierungskastens als auch die Halteböden der Thermobleche und die äußeren Thermobleche des Thermoblechmoduls mit Druck beaufschlagt werden. Dies kann durch eine starre Verbindung zwischen den Thermoblechen oder den Halteböden der Thermobleche und den Wänden des Stabilisierungskastens bewirkt werden, oder dadurch, daß die Wände des Stabilisierungskastens so ausgestaltet sind, daß sie einen äußeren Druck an die äußeren Thermobleche bzw. die Halteböden der Thermobleche des Thermoblechmoduls weitergeben, z.B. indem die Wände des Stabilisierungskastens Löcher aufweisen, durch die ein zur Druckbeaufschlagung verwendetes Fluid bis zu den äußeren Thermoblechen des Thermoblechmoduls und/oder bis zu den Halteböden des Thermoblechmoduls gelangen kann.

Jedes Thermoblechmodul wird vorteilhaft durch eine geeignete Führung, beispielsweise durch die rechteckigen Stabilisierungskästen, mit seitlich durchgehender Wandung oder beispielsweise durch eine Winkelkonstruktion in Position gehalten.

In einer Ausführungsform sind die rechteckigen Stabilisierungskästen benachbarter Thermoblechmodule gegeneinander abgedichtet. Dadurch wird eine Bypaßströmung des Reaktionsgemischs zwischen den einzelnen Thermoblechmodulen verhindert.

Damit die im wesentlichen ebenen Wände der Thermoblechmodule vor Ausbeulung und Beschädigung geschützt werden, sollte der Druck im Innenraum der Module von dem Druck im Außenraum möglichst wenig abweichen, insbesondere um nicht mehr als etwa 0,5 bar abweichen. Andernfalls müssen aufwendige und kostspielige Werkstoffe und Konstruktionen zur Verstärkung der Wände oder große Wanddicken gewählt werden, um eine Beschädigung der Thermoblechmodule zu vermeiden.

Erfindungsgemäß wesentlich ist daher, daß der Reaktor Mittel aufweist, durch die die im wesentlichen ebenen Außenwände des Thermoblechmoduls bzw. der -module mit einem vorbestimmten Druck beaufschlagt werden können. Diese Mittel können auf verschiedene Art und Weise ausgestaltet sein, es ist jedoch wesentlich, daß der Druckausgleich über ein Fluid erfolgt, das in physikalischem Kontakt mit in den Reaktor eintretendem Gas oder mit dem aus dem Reaktor austretenden Gas ist. Sofern ein Gemisch aus mehreren Komponenten in den Reaktor eintritt, kann es ausreichen, daß das Fluid, das den Druckausgleich bewirkt, in physikalischem Kontakt mit einer oder mehreren der Komponenten dieses Gasgemisches steht. Der physikalische Kontakt kann erfindungsgemäß über eine Membran vermittelt werden, oder aber auch dadurch, daß das eintretende Gas (oder eine Komponente davon) oder das austretende Gas in direktem Kontakt mit den Außenwänden des Thermoblechmoduls bzw. der Module steht.

In einer bevorzugten Ausführungsform ist der Reaktor so ausgestaltet, daß das Rohgas oder das Produktgas die im wesentlichen ebenen Außenwände des Thermoblechmoduls umströmt, so daß an den im wesentlichen ebenen Außenwänden des Moduls der gleiche Druck herrscht, mit dem das Rohgas durch das Modul geführt wird bzw. mit dem das Produktgas aus dem Modul austritt. Diese Ausführungsform ist besonders dann geeignet, wenn das Rohgas bzw. das Produktgas in der Form, in der sie auf die Außenwände des Moduls geleitet werden, nicht weiter reagieren. Insbesondere kann beispielsweise ein Rohgas eingesetzt werden, wenn es zu Reaktionen mit anderen Gasen gemischt werden muß, ehe die Reaktion ablaufen kann. In diesem Fall sind entweder das Rohgas selbst oder das zugemischte Reaktionsgas für den Druckausgleich besonders geeignet.

Falls der Druck auf die im wesentlichen ebenen Außenwände der Module über eine Komponente des Rohgases vermittelt wird, wird die Komponente des Rohgases z.B. um die im wesentlichen ebenen Außenwände des Thermoblechmoduls geleitet und von dort dem Produktgasgemisch wieder zugeführt.

In einer ebenfalls bevorzugten Ausführungsform kann die Druckübertragung auch über ein Druckmedium, z.B. ein Thermoöl, erfolgen, das gegebenenfalls von dem Rohgas oder dem Produktgas durch eine Membran, die den Druck vermitteln kann, getrennt ist. Bei dieser Ausführungsform wird in der Regel ein externer Behälter verwendet, der als Puffer zwischen Rohgas oder Produktgas einerseits und dem externen Druckmedium, z.B. dem Thermoöl, dient. Der Druck des Öls wird dann dadurch gehalten, daß das Rohgas mit dem Pufferbehälter in Kontakt steht, in dem das Thermoöl vorgehalten wird. Wenn das Thermoöl mit dem Rohgas Reaktionen eingehen kann, kann eine trennende Membran zwischen beiden Medien eingesetzt werden. Über die Membran wird der Druck des Rohgases auf das Thermoöl übertragen. Auf diese Weise ist eine niedrige Druckdifferenz zwischen dem Katalysatorraum und dem Außenraum der Thermoblechmodule sichergestellt. Sollte sich der Druck des Rohgases verändern, ändert sich damit automatisch auch der Druck des externen Mediums. Eine Ausbeulung der Thermobleche ist damit zuverlässig verhindert.

Eine Verwendung des Produktgases zur Druckvermittlung anstelle des Rohgases oder einer Komponente des Rohgases bietet sich insbesondere dann an, wenn das Rohgas so reaktionsfreudig ist, daß es möglichst bald durch den Katalysatorraum geleitet werden muß. Die Verwendung des Produktgases anstelle des Rohgases zur Druckbeaufschlagung auf die im wesentlichen ebenen Außenwände der Thermoblechmodule erfolgt in analoger Weise wie bei der Verwendung des Rohgases beschrieben.

Die erfindungsgemäße Ausgestaltung des Reaktors ist auch besonders deshalb vorteilhaft, da es nicht erforderlich ist, den Druck innerhalb der Thermoblechmodule zu messen und den Druck außerhalb der Thermoblechmodule in Abhängigkeit von dem Meßsignal anzupassen. Dadurch, daß das auf die Außenwände der Thermoblechmodule wirkende Fluid (das Rohgas, eine Komponente des Rohgases, das Produktgas, ein Inertgas oder eine Flüssigkeit wie ein Thermoöl) in physikalischem Kontakt mit dem Gasgemisch im Inneren der Thermobleche steht, entfällt eine derartige aufwändige Regelungstechnik und der erfindungsgemäße Reaktor enthält keine Vorrichtung, die in Abhängigkeit von dem Druck im Inneren der Thermobleche bzw. Thermoblechmodule ein Regelsignal für die Zufuhr eines externen Gases zur Verfügung stellt.

Durch den Einbau von quaderförmigen Thermoblechmodulen in eine überwiegend zylindrische, drucktragende Hülle verbleiben am Rand zur zylindrischen Mantelwand der Hülle relativ große freie Zwischenräume, die das zur Druckbeaufschlagung verwendete Fluid aufnehmen. Bei denjenigen Ausführungsformen der Erfindung, bei denen die Druckbeaufschlagung nicht über das Rohgas (oder eine Komponente davon) oder das Produktgas erfolgt, sondern z.B. durch ein Thermoöl, muß dieser Zwischenraum vom Reaktionsraum getrennt werden.

Hierzu kann der Zwischenraum zwischen den Thermoblechmodulen und der überwiegend zylinderförmigen Hülle z.B. mit einem Halteboden verschlossen werden. Darüber hinaus besteht die Möglichkeit, die Zwischenräume zwischen den Modulen und der Reaktorwand durch der Reaktorwand angepasste Module auszufüllen. Um eine Bypaßströmung des Reaktionsgemischs zu verhindern, muß der Trag- oder Halteboden den Zwischenraum gasdicht verschließen.

Wird nur ein Ende der Thermoblechmodule gasdicht verschlossen, kann der Zwischenraum zwischen den Thermoblechmodulen und der überwiegend zylinderförmigen Hülle auch am anderen Ende der Thermoblechmodule durch eine Blechabdeckung verschlossen werden, die nicht gasdicht ist. Es ist in einer Ausführungsform möglich, eine derartige Blechabdeckung mit Öffnungen auszubilden. Dies ist insbesondere dann vorteilhaft, wenn die Druckbeaufschlagung direkt mit dem Rohgas (oder einer Komponente davon) oder dem Produktgas erfolgt und nicht über ein externes Medium wie ein Thermoöl.

Der verbleibende Zwischenraum zwischen den Thermoblechmodulen und der vorwiegend zylinderförmigen Hülle kann in einer Ausführungsform auch mit Inertstoffen ausgefüllt sein. Geeignete Inertstoffe sind dem Fachmann bekannt.

In einer besonderen Ausführungsform kann das äußerste Thermoblech eines Thermoblechmoduls an der äußeren Seite derselben aus einem gegenüber den übrigen zur Herstellung der Thermobleche eingesetzten Blechen dickeren und somit stabileren Blech gebildet sein.

Die erfindungsgemäßen Reaktoren können auf bekannte Art und Weise mit Kompensatoren ausgestattet sein.

Die Spalte zwischen den einzelnen Thermoblechen jedes Thermoblechmoduls dienen der Aufnahme des Katalysators. Bei dem Katalysator kann es sich z.B. um einen teilchenförmigen Katalysator oder auch um einen Drahtkatalysator handeln. Falls es sich um einen partikelförmigen Katalysator handelt, sind geeignete Vorrichtungen (z.B. Roste) vorzusehen, die den Katalysator innerhalb der Thermoblechmodule halten.

Obwohl die erfindungsgemäßen Reaktoren besonders vorteilhaft zur Befüllung mit partikelförmigem heterogenem Katalysator ausgestaltet sind, ist es erfindungsgemäß ebenfalls bevorzugt, die Reaktoren nicht mit einem partikelförmigen heterogenen Katalysator sondern z.B. mit Drahtkatalysatoren zwischen den Thermoblechen zu betreiben. Da die Thermobleche im wesentlichen ebene, das heißt allenfalls gering gewölbte Oberflächen aufweisen, lassen sich in die Kanäle zwischen zwei Thermobleche besonders gut Drahtkatalysatoren einbringen. Solche Katalysatoren sind an sich bekannt und haben sich in einer Vielzahl von Reaktionen bewährt. Sie bestehen im wesentlichen aus einem Gestrick von Drähten, deren Oberfläche teilweise, bevorzugt vollständig, katalytisch aktiv ist. Mit derartigen Drahtkatalysatoren sind besonders hohe Raumgeschwindigkeiten bei niedrigem Druckverlust über die Katalysatorstrecke zu erzielen. Speziell für gekühlte Reaktionen kann ein solcher Drahtkatalysator vorteilhaft sein. Die im wesentlichen ebene Oberfläche der Drahtgewebe findet Kontakt zur Oberfläche der Thermobleche, wodurch eine besonders effiziente Kühlung des Katalysators ermöglicht wird.

In einer bevorzugten Ausführungsform der Erfindung wird die Dichte des Drahtgewebes des Drahtkatalysators an die zu erwartende Wärmeentwicklung der Reaktion angepaßt. Bei den meisten Reaktionen findet der größte Umsatz in der Nähe des Gaseintritts in den Katalysator statt. Daraus resultiert dann auch die größte Wärmeentwicklung. Bei Reaktionen, bei denen eine genaue Temperaturkonstanz erforderlich ist, kann das Drahtgewebe in diesem Bereich weniger dicht verwoben sein, so daß dort weniger katalytisch aktive Substanz für die Reaktion zur Verfügung steht. Infolgedessen wird die Temperatur gedämpft und zusammen mit der Kühlung durch die Thermobleche ein nur geringer Temperaturanstieg sichergestellt.

Während die Verwendung von Drahtkatalysatoren, insbesondere mit den erfindungsgemäßen Reaktoren, vorgesehen ist, kann das Prinzip auch bei anderen Reaktoren verwendet werden, bei denen die Thermoblechmodule nicht von außen mit Druck beaufschlagt werden. Derartige Reaktoren können ausgebildet sein, wie die hier beschriebenen erfindungsgemäßen Reaktoren, mit Ausnahme daß die Druckbeaufschlagung von außen nur ein fakultatives Merkmal darstellt. Sie haben sich bei den Thermoplattenreaktoren mit im wesentlichen ebenen Seitenflächen wie vorstehend definiert als besonders vorteilhaft erwiesen, insbesondere auch in der bevorzugten Ausführungsform mit einer über den Reaktor variablen Gitterdichte.

Die Abstandshalterung ist bei Thermoblechreaktoren, wie den erfindungsgemäßen Reaktoren, von großer Bedeutung, insbesondere bei Verwendung eines partikelförmigen heterogenen Katalysators, aber auch bei der Verwendung anderer heterogener Katalysatoren wie Drahtkatalysatoren. Wenn die Abstände zwischen den Platten nicht gleichmäßig sind, sind die einzelnen Katalysatorpartikel unterschiedlich gekühlt (bzw. Teile eines Drahtkatalysators stehen nicht in Kontakt mit den Thermoblechen und werden daher nicht gekühlt), was unter Umständen zu einer Überhitzung von Partikeln führen kann, die zu weit von der gekühlten Wand entfernt sind. Insbesondere bei selektiven Reaktionen ist häufig nur ein enges Temperaturfenster für die Reaktion zulässig. Ein präziser Abstand zwischen den Platten ist deshalb Voraussetzung für einen sicheren Betrieb. Erfindungsgemäß kann der präzise Abstand zwischen den Thermoblechen auf verschiedene Weise erreicht werden. Bevorzugt werden die Ränder der Thermobleche in einem bestimmten Abstand fixiert. Die Fixierung der Ränder der Thermobleche kann auf zweierlei Arten erfolgen. Blechstreifen einer geeigneten Höhe und Breite, z.B. 250 mm Höhe und der Breite, die dem gewünschten Abstand zwischen den Thermoblechen entspricht, werden an den Rändern zwischen die Thermobleche geschweißt. Über die Höhe der Thermobleche werden so viele derartige Bleche verteilt, daß eine zuverlässige Halterung gewährleistet ist. Dafür genügt z.B. ein solches Blech pro laufender Meter Höhe des Thermoblechs. Ähnliche Konstruktionen, die den gleichen Zweck erreichen, sind z.B. Blechbänder, die an den Rand der Thermobleche geschweißt werden, so daß diese im richtigen Abstand gehalten werden. Diese Konstruktion ist jedoch nur dann bevorzugt, wenn die Temperaturführung einen größeren Freiraum läßt, da die Außenwand der Module nicht näher als die Blechstärke der aufgeschweißten Bänder an die Thermobleche heranrücken kann. Daraus ergibt sich, daß die Katalysatorpartikel am Rand etwas weiter von der Kühlung durch das Thermoblech entfernt sind und somit heißer werden.

Um speziell die Außenbereiche der Thermobleche besser zu kühlen, kann auch das senkrecht zu den Thermoblechen montierte Außenblech als Thermoblech ausgebildet sein. Vorzugsweise wird hierbei ein Thermoblech eingesetzt, das zumindest auf einer Seite ein vollständiges oder möglichst ebenes Blech aufweist.

In einer weiteren Ausgestaltung kann der Rand der Thermobleche in gefräste Nuten des Abschlußblechs eingeschoben werden. Diese Konstruktion hat sich insbesondere für Thermobleche niedriger Bauhöhe bewährt, da bei sehr langen Thermoblechen, z.B. mit mehreren Metern Länge, die Montage mit dieser Konstruktion sehr aufwendig ist. Alternativ ist auch möglich, bei langen Thermoblechen Stücke mit gefrästen Nuten im Abschlussblech mit Stücken ohne solche Nuten abwechseln zu lassen. Dabei sind die mit Nuten gefrästen Stücke vorteilhafterweise kürzer als 1,5 m zu wählen.

Die Thermobleche bilden notwendigerweise auf ihrer Oberfläche eine Kissenstruktur aus, die stark ausgeprägt ist, wenn zum Aufblasen der Thermobleche ein hoher Druck verwendet wird und die weniger stark ausgeprägt ist, wenn zum Aufblasen der Thermobleche ein geringer Druck verwendet wird.

Der präzise Abstand bei den Thermoblechen kann dadurch erreicht werden, daß die Thermobleche derart präzise gefertigt werden, daß die Kissenstruktur über das gesamte Thermoblech praktisch identisch ist. Insbesondere beträgt bevorzugt die Abweichung der höheren Punkte der Kissen von einer auf der Kissenstruktur gedachten Ebene allenfalls einige 10tel Millimeter (wie 0,1 oder 0,2 oder 0,3 oder 0,4 oder 0,5 mm).

Die Thermobleche sind aufgrund ihrer Form in sich außerordentlich stabil und sehr gut maßhaltig. Dennoch ist es möglich, auch über die Fläche der Thermobleche Abstandshalter einzubringen. Dies kann beispielsweise durch Bolzen problemlos erreicht werden. Vorzugsweise werden auf die Bolzen Zylinder geschoben, die genau die Länge haben, die dem Abstand der Thermobleche entsprechen. Am Außenrand werden die Bolzen dann befestigt, vorzugsweise durch Verschraubung oder Verschweißen. Die Löcher in den Thermoblechen, durch die die Bolzen geführt werden, sind ohne weiteres herzustellen. Zu diesem Zweck werden in den noch nicht aufgeblasenen Thermoblechen Löcher gebohrt oder gestanzt, die Ränder in geeigneter Weise verschweißt, beispielsweise durch Laserschweißen, und danach die Thermobleche aufgeblasen.

Wie bei der Verwendung von Drahtkatalysatoren sind auch die vorstehenden Ausführungsformen mit einer speziellen Abstandshalterung zwischen den Thermoblechen zwar bevorzugt bei den erfindungsgemäßen Reaktoren einsetzbar, bei denen Thermoblechmodule von außen mit Druck beaufschlagt werden, sie sind aber auch in Reaktoren verwendbar, bei denen Thermoblechmodule eingesetzt werden, die nicht von außen mit Druck beaufschlagt werden, so daß bei diesen Ausführungsformen die Beaufschlagung der Thermoblechmodule mit Druck ein fakultatives Merkmal darstellt.

Die die Thermoblechmodule umgebende Hülle ist, wie bei den Reaktoren des Standes der Technik, überwiegend zylinderförmig mit einem Zylindermantel mit kreisförmigem Querschnitt, der an beiden Enden jeweils durch eine Haube verschlossen ist.

Gegenstand der Erfindung ist ebenfalls die Verwendung eines Reaktors zur Durchführung von Reaktionen mit starker Wärmetönung, wobei die Reaktionswärme durch einen die Thermobleche durchströmenden Wärmeträger abgeführt wird, der hierbei häufig zumindest teilweise verdampft, oder wobei der die Thermobleche durchströmende Wärmeträger der Reaktion Wärme zuführt.

Der Reaktor kann in großtechnischem Maßstab eingesetzt werden.

Es ist möglich, den Reaktor in Einzelteilen anzuliefern und am Einsatzort zusammenzubauen. Weiterhin ist möglich, die Plattenpakete im Werk mit Katalysator zu befüllen und vor Ort einfach in den Reaktor einzuschieben.

Die erfindungsgemäßen Reaktoren mit Thermoblechmodulen lassen sich einfach auch mit partikelförmigem heterogenem Katalysator befüllen. Im Falle eines partikelförmigen heterogenen Katalysators kann die Befüllung durch langsames Einrieseln des Katalysators erreicht werden. Wie bei der Schüttung in ungekühlten Reaktoren ist auf die gleichmäßige Höhe der Schüttung zu achten. Bei hoher Schüttung kann es sein, daß die Katalysatorpartikel nicht die gesamte Fallhöhe durchlaufen dürfen, da sie sonst beim Aufprall beschädigt werden können. Zur Lösung dieses Problems sieht die Erfindung zwei spezielle Verfahren vor, aber auch andere Verfahren können hierzu verwendet werden.

Bei einer erfindungsgemäßen Methode werden die Katalysatorpartikel durch Schläuche eingefüllt, die bis nahe zur jeweiligen Oberfläche der Katalysatorschüttung geführt werden. Die Schläuche dürfen um die für den Katalysator zulässige freie Fallhöhe oberhalb der jeweiligen Oberfläche enden, was in der Praxis häufig im Bereich von 0,5 bis 2 m liegt. Die zulässige freie Fallhöhe ist von der mechanischen Festigkeit des jeweiligen Katalysators abhängig. Diese Methode ist zur Befüllung anderer Reaktoren bereits im Einsatz und dem Fachmann prinzipiell bekannt. Die Schläuche bremsen die Geschwindigkeit der einzelnen Partikel soweit ab, daß keine Beschädigung eintritt. Die Befüllung mit solchen Schläuchen erfolgt bevorzugt maschinell, so daß sichergestellt ist, daß die Geschwindigkeit der Befüllung optimal eingestellt werden kann und sich keine Brücken bilden, unter denen Hohlräume entstehen, in denen kein Katalysator vorhanden ist. Derartige Brücken bzw. Hohlräume können sich insbesondere bei einer zu schnellen Befüllung mit partikelförmigem Katalysator ausbilden und zu einer ungleichen Gasverteilung führen. Umgekehrt ist bei zu niedriger Geschwindigkeit der Befüllung die Stillstandzeit des Reaktors unnötig lang. Mit maschineller Befüllung über Schläuche kann daher einmal die optimale Geschwindigkeit der Befüllung eingestellt und während der gesamten Befüllung aufrechterhalten werden und gleichzeitig Probleme, die durch eine zu hohe Fallhöhe auftreten könnten, vermieden werden.

Alternativ kann auch zwischen die Thermobleche in den erfindungsgemäßen Reaktoren ein Seil eingeführt werden, das quer über die gesamte Breite eines Strömungskanals reicht. Das Seil wird in eine Tiefe abgelassen, die die Katalysatorpartikel ohne Schaden fallen können. Das Seil bremst die Partikel auf ihrem Weg bis zum Boden des Katalysatorbettes. Eventuell muß in geeigneter Tiefe ein zweites oder weitere Seile eingebracht werden, so daß nie die zulässige Fallhöhe des Katalysators überschritten wird. Das Seil hat eine möglichst glatte Oberfläche und ist beispielsweise mit Teflon beschichtet, so daß es seitlich aus dem Zwischenraum zwischen den Thermoblechen herausgezogen werden kann, wenn die Katalysatorschüttung eine angemessene Höhe erreicht hat, also z.B. 1 Meter. Anstelle eines Seils können auch Schläuche oder Ähnliches verwendet werden. Neben einer glatten Oberfläche muß auch Zugfestigkeit des Materials gewährleistet sein. Nach Einfüllen einer gewissen Menge an Katalysator wird das Seil bzw. der Schlauch herausgezogen, über die Katalysatoroberfläche wieder eingebracht, und erneut wird Katalysator geschüttet, bis wieder eine angemessene Schütthöhe, z.B. 1 Meter, darüber erreicht ist. Der Vorgang wird solange fortgesetzt, bis die gewünschte Höhe des Katalysatorbettes hergestellt ist. Mit dieser Methode, bei der ein Seil zwischen die Thermobleche eingeführt wird, kann man die freie Fallhöhe des Katalysators genau an die mechanische Festigkeit des Katalysators anpassen, so daß Bruchmaterial praktisch nicht entsteht. Insbesondere bei selektiven Reaktionen ist dies sehr vorteilhaft, da häufig Katalysatorabrieb oder Staub wegen der großen Oberfläche besonders katalytisch aktiv ist. Da solche Stäube sich vorzugsweise am Austritt des Katalysators sammeln, kann es bei einer unsachgemäßen Füllung dort zu unerwünschten Nebenreaktionen kommen. Das wiederum kann zu Überhitzungen führen, die sich auch entgegen der Strömungsrichtung des Reaktionsgases ausdehnen und auf den gesamten Reaktor übergreifen können. Diese Schwierigkeit wird durch die vorbeschriebene Befüllung mit Hilfe eines Seils zwischen den Thermoblechen verhindert. Alternativ ist auch möglich, das Seil so dick zu wählen, daß der Katalysator nicht daran vorbei fallen kann. Katalysator wird dann bei niedriger Fallhöhe auf das Seil gefüllt, das Seil dann bis zum Boden abgelassen, seitlich herausgezogen und dieser Vorgang wiederholt, bis der gesamte Reaktor bis zur gewünschten Höhe gefüllt ist.

In einer Ausführungsform kann die Dicke des Seils auch so gewählt sein, daß auf beiden Seiten zu den Thermoblechwänden hin zumindest der Durchmesser eines Katalysatorpartikels freibleibt. So werden die Partikel zwar gebremst, können aber an dem Seil bzw. den Seilen vorbei weiterfallen. In einer anderen Ausführungsform ist die Dicke des Seils so gewählt, daß die Partikel nicht an dem Seil vorbei passieren können und erst dann tiefer in den Zwischenraum zwischen den Thermoblechen fallen, wenn das Seil entfernt wird. Die optimale Dicke eines Seils kann in Abhängigkeit von dem jeweiligen Katalysatormaterial, der Oberfläche des Seils und dem Abstand zwischen den jeweiligen Thermoblechen von einem Fachmann leicht durch wenige Routineversuche aufgefunden werden.

Die Entleerung des erfindungsgemäßen Reaktors kann nach unten oder nach oben erfolgen. Für die Entleerung nach unten macht man Gebrauch von der Schwerkraft. Die Auflage für den Katalysator wird nach unten entfernt, wobei vorzugsweise die Auflage beispielsweise durch Schrauben in nur teilweise geöffneter Stellung gehalten wird, bis der Großteil des Katalysators herausgerieselt ist. Durch diese Vorgehensweise kann verhindert werden, daß der Katalysator zu schnell herausfällt, wodurch sich ebenfalls Brücken bilden könnten, die ein weiteres Herausrieseln des Katalysators verhindern können. Zudem stellt es ein Sicherheitsrisiko dar, wenn Katalysator auf Bedienpersonal fällt.

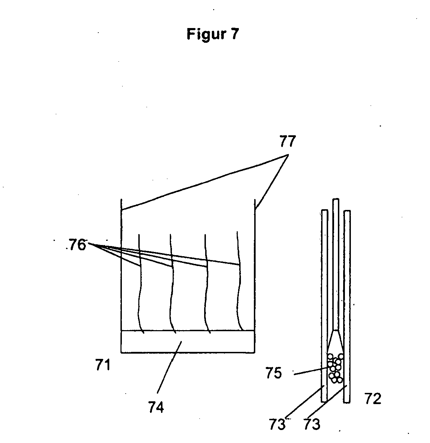

Für die Entleerung des Reaktors nach oben können beispielsweise auf an sich bekannte Art und Weise Industriestaubsauger eingesetzt werden, wie sie auch für die Entleerung ungekühlter Katalysatorbetten bekannt sind. Um die Absaugung optimal an die Form der Thermobleche anzupassen, können beispielsweise mehrere Absaugschläuche zu einer gemeinsamen Düse verbunden werden, eine Ausführungsform, wie sie in Figur 7 gezeigt ist, so daß über die gesamte Breite eines Thermoblechs oder zumindest einem großen Teil davon der Katalysator abgesaugt werden kann.

Die Halterung der Katalysatoren in dem erfindungsgemäßen Thermoblechreaktor kann auf verschiedene Art und Weise erfolgen, die von der Art des Katalysators und beispielsweise dem verfügbaren Druckverlust abhängt. Wie bereits vorstehend ausgeführt, wird in einer Ausführungsform der untere Teil des Reaktors bis ca. 0,1-0,3 m in die Thermobleche hinein mit Inertmaterial gefüllt. Als Inertmaterial eignen sich z.B. Keramikkugeln, wobei vorzugsweise die Größe der Kugeln vom Reaktorausgang hin bis zu den Thermoblechen abnimmt. So können solche Kugeln am Ausgang des Reaktors beispielsweise bis zu 20 mm Durchmesser haben, wobei sich der Durchmesser dann bis zu den Thermoblechen hin verringert. Die geringste Größe der Kugeln hängt von dem Abstand der Thermobleche und der Größe der Katalysatorpartikel ab, und bei einer bevorzugten Ausführungsform der Erfindung, bei der, wie vorstehend beschrieben, die Thermobleche einen Abstand von mindestens 8 mm aufweisen, bevorzugt aber 10 mm oder mehr aufweisen, kann die geringste Größe der Inertkugeln beispielsweise noch 5 mm oder darunter betragen.

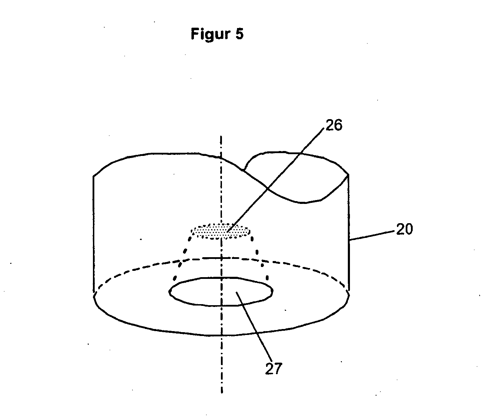

In einer bevorzugten Ausführungsform der Erfindung wird der Reaktorausgang mit einem hutförmigen Sieb abgeschlossen, wie es beispielsweise in Figur 5 gezeigt ist. Diese Konstruktion mit einem hutförmigen Sieb stellt sicher, daß einerseits der Druckverlust durch dieses Sieb gering ist, andererseits wird eine gute Gasverteilung am Austritt der Thermobleche gewährleistet. Die Verwendung eines derartigen hutförmigen Siebs hat ebenfalls Vorteile beim Entleeren des Reaktors. So kann das Sieb durch Abdrückschrauben gehalten werden, die es ermöglichen, das Sieb einen genau definierten Abstand vom Abschlußflansch des Reaktors herauszubewegen, was einen Kontrolle der Geschwindigkeit ermöglicht, mit der der Katalysator aus dem Reaktor rieselt.

In einer alternativen Ausführungsform kann an die Thermobleche auch ein Schlitzboden angeschweißt sein, der den Katalysator trägt. Auf den Schlitzboden wird ein Drahtgitter mit kleiner Maschenweite oder ein Lochblech aufgelegt, auf die dann der Katalysator geschüttet wird. Die Befestigung zwischen Schlitzboden und Thermoblechen ist bevorzugt derart gestaltet, daß der Schlitzboden ganz oder teilweise abgeklappt werden kann, so daß der Katalysator zwischen den Thermoblechen herausrieseln kann. Auch bei dieser Ausführungsform kann bevorzugt die Öffnung des Siebbodens durch Abdrückschrauben so eingestellt werden, daß der Katalysator mit kontrollierter Geschwindigkeit aus dem Reaktor herausrieselt.

In allen Reaktoren, in denen eine Umsetzung unter Kühlung stattfindet, bauen sich notwendigerweise zwischen dem Katalysatorraum, den gekühlten Oberflächen und dem Reaktormantel Differenztemperaturen auf, was zu thermischen Spannungen führt. Im Fall der bekannten Geradrohrreaktoren muß zum Ausgleich dieser thermischen Spannungen eine aufwendige Konstruktion erfolgen. Demgegenüber können bei den erfindungsgemäßen Thermoblechreaktoren die Temperaturspannungen auf einfache Art und Weise abgeführt werden. In einer bevorzugten Ausführungsform werden die Thermobleche nur an einem einzigen Festpunkt mit dem Modulgehäuse verbunden und können sich von dort aus ausdehnen. In einer bevorzugten Ausführungsform wird der Festpunkt entweder an dem unteren Kontakt des Thermoblechs mit der Modulumhüllung gewählt oder am oberen Kontakt des Thermoblechs mit der Modulumhüllung, so daß eine stehende oder hängende Konstruktion der Thermobleche in dem Thermoblechmodul verwirklicht ist. Um die Dehnung der Bleche auszugleichen, muß lediglich in der Zuleitung zu den Sammlern für die Kühlmittel z.B. an der Losseite des Thermoblechpakets ein Kompensator eingebaut sein. Der Kompensator nimmt die Dehnung auf und baut sie dadurch ab. Bei dieser stehenden oder hängenden Ausbildung der Thermobleche genügt daher vorteilhafterweise pro Reaktor ein einziger Kompensator, so daß sowohl die Kosten als auch der konstruktive Aufwand hierfür gering sind.

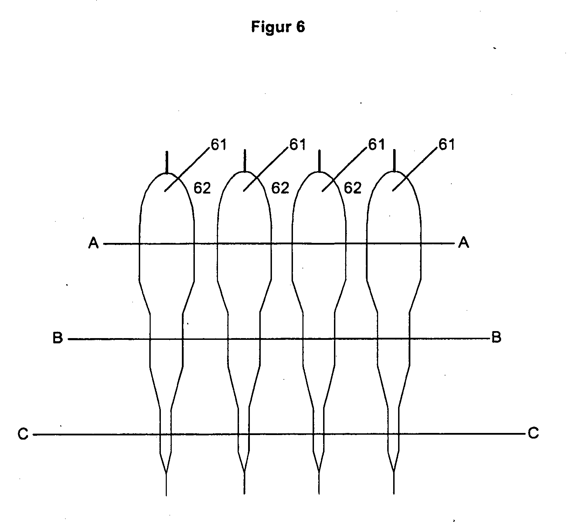

In einer besonders bevorzugten Ausführungsform von Thermoblechmodulen, bei der die Außenwände des Thermoblechmoduls mit einem vorbestimmten Druck beaufschlagt werden können, können die Abstände der beiden das Thermoblech bildende Bleche variiert werden, so daß die zwischen den beiden Blechen eingeschlossene Kühlmittelmenge an die lokal anfallende Wärmemenge angepaßt werden kann. Bei den meisten exothermen Reaktionen ist die Wärmeentwicklung nahe dem Eintritt in das Katalysatorbett am größten. Dort sollte dann auch die größte Menge an Kühlmittel zur Verfügung gestellt werden. In einem erfindungsgemäß bevorzugten Reaktor ist in einem Paket von Thermoblechen an Stellen mit großem Kühlmittelvolumen das Katalysatorvolumen kleiner, weil die mittleren Abstände der Thermobleche voneinander gleichbleiben und folglich an Stellen großen Kühlmittelvolumens die Thermobleche näher aneinanderkommen. Weniger Katalysator bedeutet, daß an dieser Stelle weniger Reaktion abläuft, so daß durch die Thermobleche mit variabler Dicke die Intensität der ablaufenden Reaktion gesteuert werden kann. Dadurch können Selektivität und Umsatz einer jeden Reaktion optimiert werden. Eine entsprechende Ausführungsform ist in Figur 6 gezeigt.

Die erfindungsgemäßen Reaktoren können für alle möglichen Reaktionen, die unter Kühlen oder Erhitzen durchgeführt werden müssen, verwendet werden. Der Reaktor kann beispielsweise bei der Reaktion von Acetylen zu Ethylen verwendet werden. Die Ausgestaltung eines Reaktors für die Umsetzung von Acetylen zu Ethylen ist beispielsweise in der EP-A 1 002 571 genauer beschrieben, und auf die dortigen Ausführungsformen wird diesbezüglich Bezug genommen. Auch andere Reaktionen mit starker Wärmetönung können im erfindungsgemäßen Reaktor durchgeführt werden, wie z.B. die Epoxidation von Olefinen, die CO-Konvertierung zur H₂-Gewinnung, die Direktoxidation von H₂S zu Elementarschwefel, die Claus-Reaktion, die Hydrierung von Kohlenwasserstoffen, insbesondere die selektive Hydrierung von Kohlenwasserstoffen, wie die C₂H₂-Hydrierung zu C₂H₄, die Oxidation von SO₂ zu SO₃, die Methanolsynthese, die Methansynthese, die Fischer-Tropsch-Synthese und die NH₃-Synthese. Alle diese Reaktionen sind exotherm. Prinzipiell ist der Reaktor jedoch ebenso geeignet, um darin endotherme Reaktionen durchzuführen. Ein spezielles Beispiel dieser Art der Verwendung des Reaktors in einer Claus-Anlage, die im letzten Reaktor unterhalb des Schwefeltaupunkts betrieben wird (= SubDewPoint, SDP-Betrieb). Wie in der EP-A 283 793 beschrieben ist, werden in diesem Verfahren zwei Reaktoren zyklisch vertauscht und dabei der schwefelbeladene Reaktor regeneriert. Zu Beginn dieser Regenerierung muß viel Wärme aufgebracht werden, um den auf dem Katalysator abgelagerten Schwefel zu verdampfen. Der erfindungsgemäße Reaktor kann diesen Vorgang unterstützen, indem ein Heizmedium, z.B. Heizkesselspeisewasser zur Erzeugung von Mitteldruckdampf in die Metallplatten geleitet wird, dadurch der Reaktor schnell erwärmt wird und so den Schwefel abtreibt. Im Normalbetrieb erwärmt sich dann der Reaktor weiter. Wenn die Temperatur des Mitteldampfdrucks erreicht ist, wendet sich die Aufgabe des Kesselspeisewassers von einer Heizung in ein Kühlmedium, das heißt durch Verdampfen wird dann Mitteldruckdampf erzeugt, der den Reaktor kühlt.

Die Erfindung wird anhand der folgenden Zeichnungen näher erläutert.

Figur 1 zeigt schematisch einen erfindungsgemäßen Reaktor mit einem Thermoblechplattenmodul, bei dem die Druckübertragung auf die Außenwände des Thermoblechmoduls über ein Druckmedium, z.B. ein Thermoöl, unter Verwendung eines externen Behälters und einer Membran erfolgt.

Figur 2 zeigt schematisch einen erfindungsgemäßen Reaktor, bei dem die Druckübertragung auf die Außenwände des Thermoblechmoduls durch eine Komponente des Rohgases erfolgt, die anschließend den übrigen Komponenten des Rohgases zugeführt wird.

Figur 3 zeigt schematisch eine weitere bevorzugte Ausführungsform des erfindungsgemäßen Reaktors, bei dem die Druckübertragung auf die Außenwände des Thermoblechmoduls durch das Rohgas bewirkt wird.

Figur 4 zeigt schematisch einen erfindungsgemäß bevorzugten Reaktor, bei dem die Druckbeaufschlagung auf die Außenwände des Thermoblechmoduls durch das Produktgas erfolgt.

Figur 5 zeigt ein hutförmiges Sieb, wie es in einer bevorzugten Ausführungsform zum Abschluß des Reaktorausgangs verwendet werden kann.

Figur 6 zeigt schematisch einen Ausschnitt aus einem erfindungsgemäß besonders bevorzugten Reaktor, bei dem die Abstände der beiden das Thermoblech bildenden Bleche variiert werden, so daß die zwischen den beiden Blechen eingeschlossene Kühlmittelmenge an die lokal anfallende Wärmemenge angepaßt werden kann.

Figur 7 zeigt schematisch die Entleerung eines erfindungsgemäßen Reaktors durch Absaugen.

Figur 8 zeigt schematisch eine bevorzugte Ausführungsform des erfindungsgemäßen Reaktors, bei dem der Abstand zwischen den Thermoblechen dadurch sichergestellt wird, daß die Thermobleche seitlich in Nuten in der Gehäusewand bzw. dem Halteboden des Thermoblechmoduls eingesetzt werden.

Figur 9 zeigt schematisch die kissenförmige Struktur der erfindungsgemäß bevorzugt verwendeten Thermobleche.

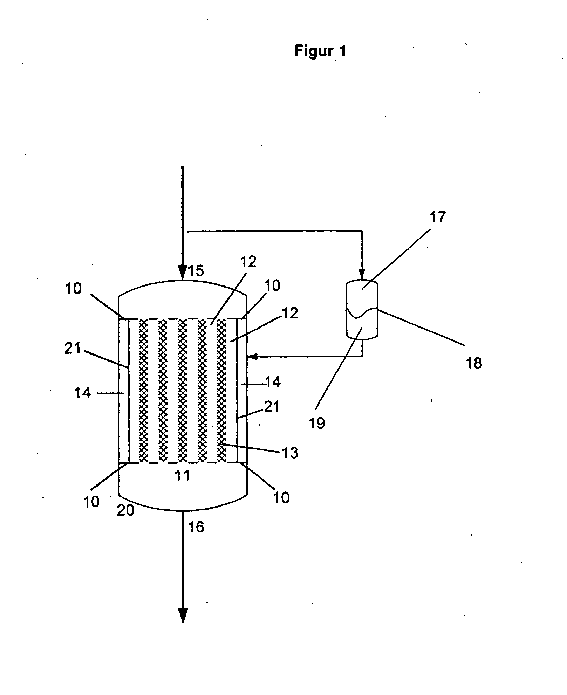

Figur 1 zeigt schematisch einen im wesentlichen zylinderförmigen Reaktor 20 mit einem Thermoblechmodul 11. Rohgas (der Begriff umfaßt auch ein Rohgasgemisch) wird bei 15 in den Reaktor eingeführt und verläßt den Reaktor bei 16. Das Thermoblechmodul 11 weist Thermobleche 12 und Spalten 13 zwischen den Thermoblechen auf, die mit einem heterogenen Katalysator gefüllt sind. Die Wände 21 des Thermoblechmoduls sind im wesentlichen eben, und konstruktionsbedingt besteht ein Zwischenraum 14 zwischen den im wesentlichen ebenen Wänden 21 des Thermoblechmoduls und der im wesentlichen zylinderförmigen Hülle des Reaktors 20. Bei der in Figur 1 gezeigten Ausführungsform des erfindungsgemäßen Reaktors erfolgt die Druckübertragung auf die Außenwände des Thermoblechmoduls über ein Druckmedium, das sich in einem externen Behälter 18 befindet und mit dem Zwischenraum 14 zwischen dem Thermoblechmodul und der Hülle des Reaktors in fluider Verbindung steht. In dem externen Behälter befindet sich das Druckmedium in einem Bereich 19 und steht in Kontakt mit dem Rohgas, das sich in dem Bereich 17 des externen Behälters 18 befindet und das bei 15 in den Reaktor eintritt (in einer anderen hier nicht dargestellten Ausführungsform steht das Druckmedium über den externen Behälter in Kontakt mit dem Produktgas, das bei 16 den Reaktor verläßt). In einer bevorzugten Ausführungsform ist der Bereich 19 des externen Behälters 18, in dem sich das Druckmedium befindet, von dem Bereich 17 des externen Behälters 18, in dem sich das Rohgas befindet, durch eine in Figur 1 schematisch dargestellte Membran getrennt, die den Druck des Rohgases auf das Druckmedium weitergibt. Bei der in Figur 1 dargestellten Ausführungsform muß der Zwischenraum 14 zwischen den im wesentlichen ebenen Außenplatten 21 des Thermoblechmoduls 11 und der im wesentlichen zylinderförmigen Hülle des Reaktors 20 durch Dichtungen 10 abgeschlossen sein, die für das Druckmedium und bevorzugt auch für das Rohgas und das Produktgas undurchlässig sind. Hierdurch wird verhindert, daß das Rohgas oder das Produktgas durch Druckmedium verunreinigt wird oder daß das Druckmedium mit den Gasen in Kontakt kommt. Durch die in Figur 1 gezeigte Ausführungsform wird sichergestellt, daß sich der Druck, den das Druckmedium auf die Außenwände 21 des Thermoblechmoduls 11 ausübt, automatisch in Echtzeit dem Druck des Rohgases anpaßt und damit nicht akzeptable Druckunterschiede zwischen dem Inneren des Thermoblechmoduls 11 und dem Äußeren des Thermoblechmoduls 11 vermeidet.

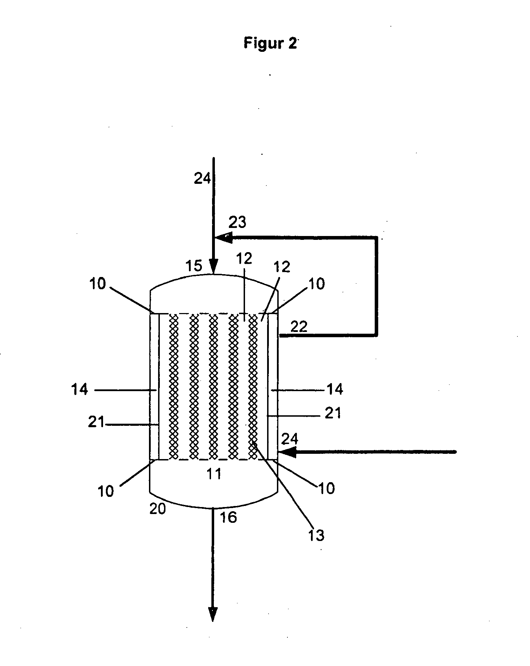

Figur 2 zeigt wie Figur 1 einen erfindungsgemäßen, im wesentlichen zylinderförmigen Reaktor 20 mit einem Thermoblechmodul 11, das Thermobleche 12 und zwischen den Thermoblechen Zwischenräume 13 mit einem heterogenen, beispielsweise partikelförmigen, Reaktor aufweist. Auch hier besteht konstruktionsbedingt ein Zwischenraum 14 zwischen den im wesentlichen ebenen Außenwänden 21 des Thermoblechmoduls 11 und den im wesentlichen zylinderförmigen Außenwänden des Reaktors 20. Die Druckbeaufschlagung erfolgt in der in Figur 2 gezeigten Ausführungsform durch eine Komponente des Rohgases, die bei 24 in den Zwischenraum 14 eintritt und bei 22 aus diesem Zwischenraum wieder abgeleitet wird. Die Komponente des Rohgases wird dann bei 23 mit den übrigen Komponenten des Rohgases vermischt und bei 15 in den Reaktor eingeleitet. Das Produktgas tritt bei 16 aus dem Reaktor aus. Auch bei dieser Ausführungsform ist es wesentlich, daß der Zwischenraum 14 zumindest von dem Produktgasbereich des Reaktors durch Dichtungen 10 abgeschlossen wird.

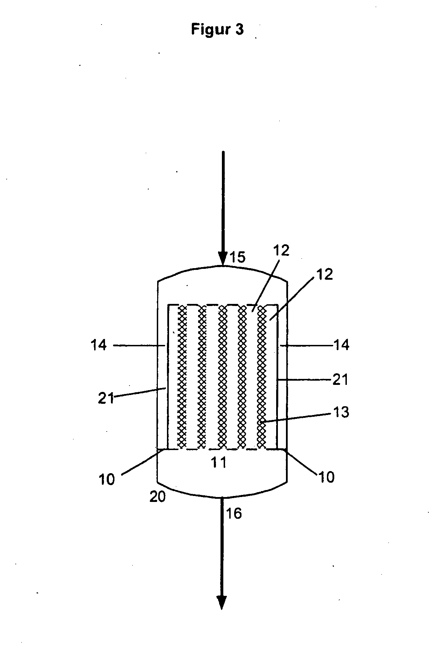

Figur 3 zeigt eine weitere Ausführungsform des erfindungsgemäßen im wesentlichen zylinderförmigen Reaktors 20 mit einem Thermoblechmodul 11 mit Thermoblechen 12 und Zwischenräumen zwischen den Thermoblechen 13. Das Produktgas tritt wieder bei 15 in den Reaktor ein, kann aber bei dieser Ausführungsform in den Zwischenraum 14 zwischen den im wesentlichen ebenen Seitenwänden 21 des Thermoblechmoduls 11 und den im wesentlichen zylindrischen Seitenwänden des Reaktors 20 eindringen, so daß an den Seitenwänden der gleiche Druck herrscht, mit dem das Rohgas zwischen den Thermoblechmodulen hindurchgeführt wird. Nach erfolgter Umsetzung verläßt das Produktgas wieder bei 16 den Reaktor. Bei dieser Ausführungsform muß eine Abdichtung 10 zwischen dem Zwischenraum 14 und dem Bereich, in den das Produktgas eintreten kann, das bei 16 den Reaktor verläßt, vorhanden sein. Der Bereich des Reaktors, in dem das Rohgas bei 15 eintritt, darf dagegen nicht dicht von dem Zwischenraum 14 abgetrennt sein. Es kann allerdings z.B. ein nicht gasdichtes Blech, das gegebenenfalls Löcher aufweist, zur Abtrennung verwendet werden. In einer alternativen Ausführungsform kann das Rohgas auch seitlich direkt in den Zwischenraum 14 eingeführt werden und gelangt von dort in das Innere des Thermoblechmoduls 11.

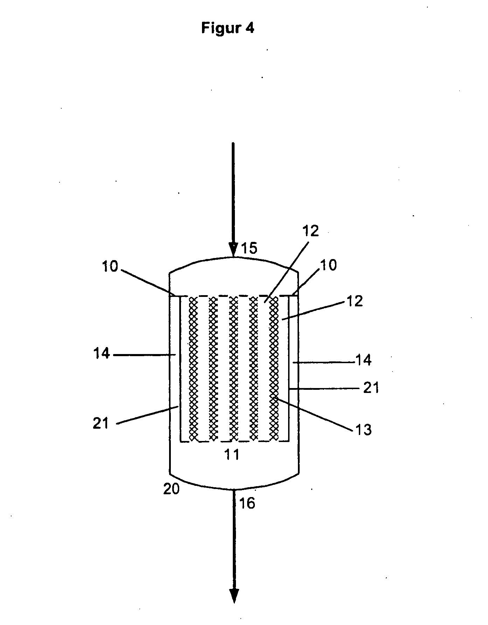

Figur 4 zeigt wiederum einen im wesentlichen zylindrischen Reaktor 20 mit einem Thermoblechmodul 11 mit Thermoblechen 12 und einem Zwischenraum zwischen den Thermoblechen 13, der mit z.B. partikelförmigem heterogenem Katalysator befüllt werden kann. Bei dieser Ausführungsform ist der Zwischenraum 14 zwischen den im wesentlichen ebenen Seitenwänden 21 des Thermoblechmoduls 11 und den im wesentlichen zylindrischen Seitenwänden des Reaktors 20 durch Dichtungen 10 so abgetrennt, daß das bei 15 in den Reaktor eintretende Rohgas nicht in diesen Zwischenraum eintreten kann. Allerdings kann das Produktgas, das dann bei 16 aus dem Reaktor abgeführt wird, in den Zwischenraum 14 eintreten, so daß in dem Zwischenraum der gleiche Druck herrscht, den auch das Produktgas hat, wodurch die im wesentlichen ebenen Seitenwände 21 des Thermoblechmoduls 11 mit diesem Druck beaufschlagt werden. Analog zu der Ausführungsform der Figur 3 kann bei der erfindungsgemäßen Ausführungsform der Figur 4 der Bereich des Reaktors, durch den das Produktgas nach Durchgang durch die Thermoblechmodule 11 abfließt, von dem Zwischenraum 14 nicht dichtend, z.B. durch Bleche, die gegebenenfalls Löcher aufweisen, abgetrennt sein.

Figur 5 zeigt ein hutförmiges Sieb, das in einer bevorzugten Ausführungsform der Erfindung als Abschluß am Reaktorausgang vorgesehen ist. Die Reaktorwand ist mit 20 bezeichnet.

Das hutförmige Sieb weist eine Siebfläche 26 und eine Öffnung 27 auf. Die Siebfläche 26 hält das Katalysatormaterial (im Falle eines heterogenen partikelförmigen Katalysators) zurück. In einer bevorzugten Ausführungsform (nicht dargestellt) kann die Siebfläche 26 durch Andrückschrauben an der Position festgehalten werden. Beim Lösen der Schrauben kann das Katalysatormaterial kontrolliert durch die Öffnung 27 abgelassen werden.

Figur 6 zeigt einen Ausschnitt aus einer bevorzugten Ausführungsform der Erfindung, bei der die Thermobleche in dem Thermoblechmodul so ausgestaltet sind, daß die Abstände zwischen den das Thermoblech bildenden Blechen und damit auch die Abstände zwischen den Thermoblechen über die Länge des Reaktors variiert werden können. Figur 6 zeigt Thermobleche 61 und die Zwischenräume zwischen den Thermoblechen 62, die bei dieser Ausführungsform in der Regel mit partikelförmigem heterogenem Katalysator gefüllt werden. Der Abstand zwischen den Thermoblechen steigt von der Linie A-A über die Linie B-B zur Linie C-C hin an, während gleichzeitig der für das Kühlmedium verfügbare Raum geringer wird. Wenn das Rohgas in den Reaktor eintritt, passiert es zunächst den Bereich um die Linien A-A, in der starke Kühlung und nur eine geringe Menge Katalysatormaterial vorhanden sind. Die bei Ausführungsformen des Standes der Technik häufig beobachtbare Überhitzung der Reaktion am Beginn des Reaktors kann so vermieden werden. Während das Rohgas sich weiter im Reaktor über die Linien B-B und C-C fortbewegt, steigt die Menge an Katalysatormaterial an, und die Kühlung wird geringer, wodurch die Reaktion verstärkt abläuft. Insgesamt kann mit der hier gezeigten Ausführungsform eine ausgezeichnete Kontrolle der Geschwindigkeit und der Selektivität der Reaktion erreicht werden. Auch bei dieser Ausführungsform sind die Außenwände der Thermobleche im wesentlichen eben, wobei sich der Ausdruck "im wesentlichen eben" auf die sich im wesentlichen parallel gegenüberstehenden Seiten der Thermobleche bei A-A, B-B und C-C beziehen. Die Darstellung ist nicht maßstabsgerecht.

Figur 7 zeigt eine bevorzugte Vorrichtung, die zum Entleeren der erfindungsgemäßen Thermoblechmodule besonders geeignet ist. Eine derartige Vorrichtung ist bei 71 in schematischer Frontansicht und bei 72 in schematischer Seitenansicht gezeigt. Eine Absaugdüse 74 für den Katalysator wird an Stangen 77 in das Katalysatorbett eingeführt, und der Katalysator wird durch die Schläuche 76 abgesaugt. In der schematischen Seitenansicht 72 sind die Thermobleche 73 und die dazwischen befindlichen Katalysatorpartikel 75 zu sehen.

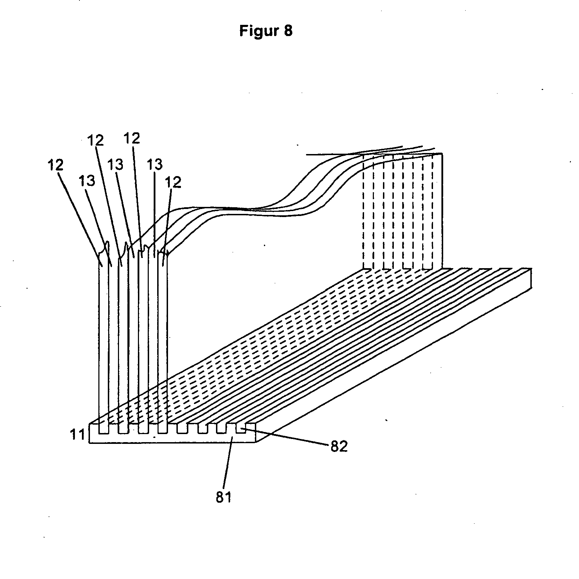

Figur 8 zeigt eine besonders bevorzugte Ausführungsform der erfindungsgemäßen Thermoblechmodule, bei der die Thermobleche 12 in Nuten 82 der seitlichen Führung (bzw. der Seitenwände oder der Halteböden, die Ausdrücke werden synonym verwendet) 81 der Thermobleche 11 eingeführt werden. Durch die Verwendung von Nuten 82 in den Seitenwänden 81 der Thermoblechmodule 11 kann auf einfache Art und Weise der Abstand 13 zwischen den im wesentlichen ebenen Thermoblechen 12 fixiert werden.

Figur 9 zeigt einen Ausschnitt aus einer erfindungsgemäß bevorzugten Ausführungsform der Thermoblechmodule 11. In Figur 9 ist die kissenförmige Ausbildung der Thermobleche 12, die die Zwischenräume 13 für den heterogenen partikelförmigen Katalysator bilden, verdeutlicht. In dieser Figur sind die Schweißpunkte 130 zwischen den einzelnen die Thermobleche 12 bildenden Blechen dargestellt. Die Pfeile 140 geben die Strömung des Kühlmediums (bzw. des Heizmediums) an und die Pfeile 150 die Strömung des umzusetzenden Gasgemisches. Bevorzugt sind diese Strömungsrichtungen gegenläufig.

## Patentansprüche

1. Reaktor zur Durchführung katalysierter chemischer Reaktionen mit einer zylindrischen, drucktragenden Hülle und einem Trag- oder Halteboden mit einem oder mehreren Thermoblechmodulen (11), die aus Thermoblechen gebildet sind, mit im wesentlichen parallel zueinander unter Freilassung jeweils einer Spalte zur Aufnahme eines festen Katalysators (13) angeordneten Thermoblechen (12) und mit einem Zwischenraum (14) zwischen den Thermoblechmodulen und der zylinderförmigen Hülle, wobei die Thermobleche aus Wärmeüberträgerplatten bestehen, bei denen zwei rechteckige Bleche an ihren Längs- und Stirnseiten zu einem Thermoblech verbunden sind, und über die Rechteckfläche die Bleche miteinander durch Punktschweißungen und/oder durch Rollschweißungen verbunden sind, und dazu parallelen, im wesentlichen ebenen Außenwänden (21), **dadurch gekennzeichnet, daß** der Reaktor Mittel (10, 14, 18) aufweist, durch die die im wesentlichen ebenen Außenwände (21) des Thermoblechmoduls bzw. der -module (11) mit einem vorbestimmten Druck beaufschlagt werden können und die Mittel (10, 14, 18) so ausgestaltet sind, daß der Trag- oder Halteboden den Zwischenraum (14) gasdicht verschließt, um eine Bypaßströmung des Reaktionsgemischs zu verhindern und daß die Druckbeaufschlagung ausschließlich über ein Fluid erfolgt, das in physikalischem Kontakt mit zumindest einer Komponente des in den Reaktor eintretenden Gases, dem austretenden Gas oder beidem steht und der physikalische Kontakt entweder über eine Membran vermittelt wird oder daß das eintretende Gas oder eine Komponente davon oder das austretende Gas in direktem Kontakt mit den Außenwänden des Thermoblechmoduls bzw. der Module steht, und daß der Druck auf den im wesentlichen ebenen Außenwänden (21) des Thermoblechmoduls bzw. der -module (11) im wesentlichen dem Druck des Produktgases bzw. der Produktgase entspricht oder daß der Druck auf den im wesentlichen ebenen Außenwänden (21) des Thermoblechmoduls bzw. der -module (11) im wesentlichen dem Druck des Rohgases bzw. einer Komponente des Rohgases entspricht.

2. Reaktor nach Anspruch 1, **dadurch gekennzeichnet, daß** die Mittel, durch die die im wesentlichen ebenen Außenwände (21) des Thermoblechmoduls bzw. der -module (11) mit einem vorbestimmten Druck beaufschlagt werden können, so ausgestaltet sind, daß der Druck auf den im wesentlichen ebenen Außenwänden (21) des Thermoblechmoduls bzw. der -module (11) über ein externes Druckhaltemedium beaufschlagt wird.

3. Reaktor nach Anspruch 2, **dadurch gekennzeichnet, daß** das externe Druckhaltemedium ein Thermoöl ist, das über eine Membran (18) von dem Produktgas, dem Rohgas oder einer Komponente des Rohgases getrennt ist.

4. Reaktor nach einem der Ansprüche 1 bis 3, **dadurch gekennzeichnet, daß** die im wesentlichen ebenen Außenwände (21) des Thermoblechmoduls bzw. der -module (11) jeweils aus einem Thermoblech (12) gebildet sind.

5. Reaktor nach einem der Ansprüche 1 bis 4, **dadurch gekennzeichnet, daß** der Abstand zwischen den Thermoblechen (12) durch Abstandshalter fixiert ist.

6. Reaktor nach Anspruch 5, **dadurch gekennzeichnet, daß** die Abstandshalter so ausgestaltet sind, daß die Ränder der Thermobleche (12) in einem bestimmten Abstand fixiert sind.

7. Reaktor nach Anspruch 6, **dadurch gekennzeichnet, daß** weiterhin auch über die Fläche der Thermobleche (12) Abstandshalter vorgesehen sind.

8. Reaktor nach einem der Ansprüche 1 bis 7, **dadurch gekennzeichnet, daß** zwischen den Thermoblechen (12) ein heterogener, partikelförmiger Katalysator eingebracht ist.

9. Reaktor nach einem der Ansprüche 1 bis 7, **dadurch gekennzeichnet, daß** zwischen den Thermoblechen (12) ein Drahtkatalysator eingebracht ist.

10. Reaktor nach einem der Ansprüche 1 bis 9, **dadurch gekennzeichnet, daß** der untere Teil des Reaktors am Reaktorausgang bis in die Thermobleche (12) hinein mit Inertmaterial gefüllt ist.

11. Reaktor nach einem der Ansprüche 1 bis 10, **dadurch gekennzeichnet, daß** der Reaktorausgang durch ein hutförmiges Sieb abgeschlossen ist.

12. Reaktor nach einem der Ansprüche 1 bis 11, **dadurch gekennzeichnet, daß** die Thermobleche (12) nur über einen Festpunkt mit dem Reaktor verbunden sind, der entweder oben an dem Reaktor vorgesehen ist (hängende Konstruktion) oder unten am Reaktor vorgesehen ist (stehende Konstruktion) und der Reaktor weiterhin mindestens einen Kompensator für die Kühlmittelzuleitungen oder Kühlmittelableitungen aufweist.

13. Reaktor nach einem der Ansprüche 1 bis 12, **dadurch gekennzeichnet, daß** ein Thermoblech (61) mindestens zwei im wesentlichen ebene Flächen mit unterschiedlicher Dicke aufweist.

14. Reaktor nach einem der Ansprüche 1 bis 13, **dadurch gekennzeichnet, daß** zumindest eine der im wesentlichen senkrecht zu den Thermoblechen (12) stehende Außenwand (81) des Thermoblechmoduls bzw. der Thermoblechmodule (11) Nuten (82) aufweist, in die die Thermobleche (12) eingeschoben sind.

15. Verfahren zur Durchführung einer Reaktion mit starker Wärmetönung, **dadurch gekennzeichnet, daß** die Reaktion in den Spalten mit festem Katalysator zwischen den Thermoblechen eines Reaktors, wie er in einem der Ansprüche 1 bis 14 definiert ist, durchgeführt wird.

16. Verfahren nach Anspruch 15, **dadurch gekennzeichnet, daß** es sich um eine CO-Konvertierung, die Epoxidation von Olefinen zur Olefinoxidherstellung, um eine selektive Hydrierung von Kohlenwasserstoffen, beispielsweise von C₂H₂ zu C₂H₄, um eine nichtselektive Hydrierung von Kohlenwasserstoffen, z.B. von C₂H₄ zu C₂H₆, um eine Methansynthese, um eine Methanolsynthese, um eine Clausreaktion, um die Direktoxidation von H₂S zu Elementarschwefel, um eine Fischer-Tropsch-Synthese, um eine Oxidation von SO₂ zu SO₃ oder um einen Synthese von NH₃ handelt.

17. Verfahren zum Befüllen eines Reaktors mit Thermoblechen mit einem heterogenen Katalysator, bei dem ein heterogener Katalysator zwischen die Thermobleche eingebracht wird, **dadurch gekennzeichnet, daß** es sich bei dem Reaktor um einen Reaktor nach einem der Ansprüche 1 bis 14 handelt.

18. Verfahren nach Anspruch 17, **dadurch gekennzeichnet, daß** es sich bei dem Katalysator um ein heterogenes, partikelförmiges Material handelt und das heterogene, partikelförmige Material durch Schläuche, die bis nahe zur jeweiligen Oberfläche der Katalysatorschüttung geführt werden, in den Zwischenraum zwischen zwei Thermobleche eingefüllt werden.

19. Verfahren nach Anspruch 17, **dadurch gekennzeichnet, daß** es sich bei dem Katalysator um ein heterogenes, partikelförmiges Material handelt und zwischen die Thermobleche ein Seil eingeführt wird, das quer über die gesamte Breite eines Strömungskanals reicht, das Seil in eine Tiefe abgelassen wird, die die Katalysatorpartikel ohne Schaden fallen können, und nach dem Befüllen mit dem Katalysator das Seil seitlich aus der Katalysatorschüttung herausgezogen wird, wenn die Katalysatorschüttung eine angemessene Höhe erreicht hat.

20. Verfahren nach einem der Ansprüche 17 bis 19, **dadurch gekennzeichnet, daß** der Reaktor Thermoblechmodule aufweist und die Thermoblechmodule außerhalb des Reaktors mit Katalysator gefüllt werden und nach der Befüllung in den Reaktor eingebaut werden.

## Claims

1. Reactor for carrying out catalysed chemical reactions, comprising a cylindrical, pressurized cover and a support or holding basis comprising one or more thermal plate modules (11) formed from thermal plates, wherein the thermal plates (12) are arranged substantially parallel to one another leaving in each case a gap for receiving a solid catalyst (13) and a space (14) between the thermal plate modules and the cylindrical cover, wherein the thermal plates are formed from heat exchanger plates, wherein two rectangular plates are connected at their long sides and their front sides to form one thermal plate, and wherein the plates are connected on their rectangular surfaces by spot welding and/or bead welding, and substantially flat outer walls (21) parallel thereto, **characterized in that** the reactor has means (10, 14, 18) by which the substantially flat outer walls (21) of the thermal plate module or of the thermal plate modules (11) can be subjected to a predetermined pressure, and the means (10, 14, 18) are designed such that the support or holding basis closes the space (14) gastight in order to prevent any bypass stream of the reaction mixture, and **in that** the pressure is applied exclusively via a fluid which is in physical contact with at least one component of the gas entering the reactor, with the emerging gas or with both and **in that** the physical contact is effected either via a membrane or **in that** the entering gas or a component thereof or the emerging gas is in direct contact with the outer walls of the thermal plate module or thermal plate modules, and **in that** the pressure on the substantially flat outer walls (21) of the thermal plate module or of the thermal plate modules (11) corresponds substantially to the pressure of the product gas or of the product gases or **in that** the pressure on the substantially flat outer walls (21) of the thermal plate module or of the thermal plate modules (11) corresponds substantially to the pressure of the crude gas or of a component of the crude gas.

2. Reactor according to Claim 1, **characterized in that** the means by which the substantially flat outer walls (21) of the thermal plate module or of the thermal plate modules (11) can be subjected to a predetermined pressure are designed such that the pressure on the substantially flat outer walls (21) of the thermal plate module or of the thermal plate modules (11) is applied via an external pressure-maintaining medium.

3. Reactor according to Claim 2, **characterized in that** the external pressure-maintaining medium is a thermal oil which is separated by means of a membrane (18) from the product gas, the crude gas or a component of the crude gas.

4. Reactor according to any of Claims 1 to 3, **characterized in that** the substantially flat outer walls (21) of the thermal plate module or of the thermal plate modules (11) are formed in each case from a thermal plate (12).

5. Reactor according to any of Claims 1 to 4, **characterized in that** the distance between the thermal plates (12) is fixed by spacers.

6. Reactor according to Claim 5, **characterized in that** the spacers are designed so that the edges of the thermal plates (12) are fixed at a certain distance.

7. Reactor according to Claim 6, **characterized in that** spacers are also provided over the area of the thermal plates (12).

8. Reactor according to any of Claims 1 to 7, **characterized in that** a heterogeneous particulate catalyst is introduced between the thermal plates (12).

9. Reactor according to any of Claims 1 to 7, **characterized in that** a wire catalyst is introduced between the thermal plates (12).

10. Reactor according to any of Claims 1 to 9, **characterized in that** the lower part of the reactor from the reactor exit into the thermal plates (12) is filled with inert material.

11. Reactor according to any of Claims 1 to 10, **characterized in that** the reactor exit is closed by a hat-like screen.

12. Reactor according to any of Claims 1 to 11, **characterized in that** the thermal plates (12) are connected to the reactor only via one fixed point which is provided either at the top of the reactor (hanging construction) or at the bottom of the reactor (standing construction) and the reactor furthermore has at least one compensator for the coolant feed lines or coolant discharge lines.

13. Reactor according to any of Claims 1 to 12, **characterized in that** a thermal plate (61) has at least two substantially flat areas having different thicknesses.

14. Reactor according to any of Claims 1 to 13, **characterized in that** at least one of the outer walls (81) of the thermal plate module or the thermal plate modules (11), which outer walls are substantially perpendicular to the thermal plates (12), has grooves (82) into which the thermal plates (12) are pushed.

15. Method for carrying out a reaction with strong heat of reaction, **characterized in that** the reaction is carried out in the gaps with solid catalyst between the thermal plates of a reactor, as defined in any of Claims 1 to 14.

16. Method according to Claim 15, **characterized in that** it is a CO conversion, the epoxidation of olefins for olefin-oxide preparation, a selective hydrogenation of hydrocarbons, for example C₂H₂ to C₂H₄, and a non-selective hydrogenation of hydrocarbons, e.g. of C₂H₄ to C₂H₆, a methane synthesis, a methanol synthesis, a Claus reaction, the direct oxidation of H₂S to elemental sulphur, a Fischer Tropsch synthesis, an oxidation of SO₂ to SO₃ or a synthesis of NH₃.

17. Method for filling a reactor comprising thermal plates with a heterogeneous catalyst, in which a heterogeneous catalyst is introduced between the thermal plates, **characterized in that** the reactor is a reactor according to any of Claims 1 to 14.

18. Method according to Claim 17, **characterized in that** the catalyst is a heterogeneous particulate material, and the heterogeneous, particulate material is introduced into the space between two thermal plates through hoses which are led close to the respective surface of the catalyst bed.

19. Method according to Claim 17, **characterized in that** the catalyst is a heterogeneous, particulate material, and a cable which extends transversely over the total width of a flow channel is introduced between the thermal plates, the cable is lowered to a depth to which the catalyst particles can fall without damage and, after the filling with the catalyst, the cable is pulled out laterally from the catalyst bed when the catalyst bed has reached an appropriate height.

20. Method according to any of Claims 17 to 19, **characterized in that** the reactor has thermal plate modules and the thermal plate modules are filled with catalyst outside the reactor and are installed in the reactor after the filling.

## Revendications

1. Réacteur pour la mise en oeuvre de réactions chimiques catalysées, comprenant une enveloppe cylindrique supportant une pression et une base de support ou de maintien dotée de un ou plusieurs modules de tôles thermiques (11), lesquels sont formés à partir de tôles thermiques, comprenant des tôles thermiques (12) disposées essentiellement de manière parallèle les unes par rapport aux autres de manière à laisser dégagée respectivement une fente servant à recevoir un catalyseur solide (13) et comprenant une chambre intermédiaire (14) entre les modules de tôles thermiques et l'enveloppe cylindrique, où les tôles thermiques sont constituées de plaques d'échange de chaleur, pour lesquelles deux tôles rectangulaires sont reliées au niveau de leurs côtés longitudinaux et frontaux pour former une tôle thermique, et où les tôles sont reliées entre elles par l'intermédiaire de la surface rectangulaire par soudage par points et/ou par soudage en rouleaux, et comprenant en complément des parois extérieures (21) parallèles, essentiellement planes, **caractérisé en ce que** le réacteur présente des moyens (10, 14, 18), lesquels permettent de soumettre les parois extérieures (21) essentiellement planes du module de tôles thermiques ou des modules de tôles thermiques (11) à l'action d'un pression prédéfinie, et **en ce que** les moyens (10, 14, 18) sont configurés de telle manière que la base de support ou de maintien ferme de manière étanche aux gaz la chambre intermédiaire (14) afin d'empêcher un écoulement de dérivation du mélange réactionnel, et **en ce que** l'action de soumettre à l'action d'une pression ne se produit que par l'intermédiaire d'un fluide qui se trouve en contact physique avec au moins un composant du gaz entrant dans le réacteur, avec le gaz sortant ou avec les deux, et **en ce que** le contact physique se fait soit par l'intermédiaire d'une membrane, ou **en ce que** le gaz entrant ou un composant de ce dernier ou le gaz sortant se trouve en contact direct avec les parois extérieures du module de tôles thermiques ou des modules de tôles thermiques, et **en ce que** la pression exercée sur les parois extérieures (21) essentiellement planes du ou des modules de tôles thermiques (11) correspond essentiellement à la pression du gaz de produit ou des gaz de produit ou **en ce que** la pression exercée sur les parois extérieures (21) essentiellement planes du ou des modules de tôles thermiques (11) correspond essentiellement à la pression du gaz brut ou d'un composant du gaz brut.

2. Réacteur selon la revendication 1, **caractérisé en ce que** les moyens, qui permettent de soumettre les parois extérieures (21) essentiellement planes du module ou des modules de tôles thermiques (11) à l'action d'une pression prédéfinie, sont configurés de telle manière que la pression exercée sur les parois extérieures (21) essentiellement planes du module ou des modules de tôles thermiques (11) est appliquée par l'intermédiaire d'un milieu de retenue de pression externe.

3. Réacteur selon la revendication 2, **caractérisé en ce que** le milieu de retenue de pression externe est une huile thermique, qui est séparée par l'intermédiaire d'une membrane (18) du gaz de produit, du gaz brut ou d'un composant du gaz brut.

4. Réacteur selon l'une quelconque des revendications 1 à 3, **caractérisé en ce que** les parois extérieures (21) essentiellement planes du module ou des modules de tôles thermiques (11) sont formées respectivement à partir d'une tôle thermique (12).

5. Réacteur selon l'une quelconque des revendications 1 à 4, **caractérisé en ce que** la distance entre les tôles thermiques (12) est fixée par des écarteurs.

6. Réacteur selon la revendication 5, **caractérisé en ce que** les écarteurs sont configurés de telle manière que les bords des tôles thermiques (12) sont fixés à une certaine distance.

7. Réacteur selon la revendication 6, **caractérisé en ce qu'**en outre sont également prévus des écarteurs sur la surface des tôles thermiques (12).

8. Réacteur selon l'une quelconque des revendications 1 à 7, **caractérisé en ce qu'**un catalyseur particulaire hétérogène est mis en place entre les tôles thermiques (12).

9. Réacteur selon l'une quelconque des revendications 1 à 7, **caractérisé en ce qu'**un catalyseur à fil est mis en place entre les tôles thermiques (12).

10. Réacteur selon l'une quelconque des revendications 1 à 9, **caractérisé en ce que** la partie inférieure du réacteur est remplie d'un matériau inerte à la sortie du réacteur jusque dans les tôles thermiques (12).

11. Réacteur selon l'une quelconque des revendications 1 à 10, **caractérisé en ce que** la sortie de réacteur est obturée par un tamis en forme de chapeau.

12. Réacteur selon l'une quelconque des revendications 1 à 11, **caractérisé en ce que** les tôles thermiques (12) sont reliées uniquement par l'intermédiaire d'un point fixe au réacteur, lequel est prévu soit en haut sur le réacteur (construction en suspension) soit en bas sur le réacteur (construction verticale), et **en ce que** le réacteur présente en outre au moins un compensateur pour les conduites d'amenée d'agent réfrigérant ou les conduites d'évacuation d'agent réfrigérant.

13. Réacteur selon l'une quelconque des revendications 1 à 12, **caractérisé en ce qu'**une tôle thermique (61) présente au moins deux surfaces essentiellement planes présentant une épaisseur différente.

14. Réacteur selon l'une quelconque des revendications 1 à 13, **caractérisé en ce qu'**au moins une paroi extérieure (81) du module ou des modules de tôles thermiques (11), se trouvant essentiellement de manière perpendiculaire par rapport aux tôles thermiques (12), présente des rainures (82) dans lesquelles sont insérées les tôles thermiques (12).

15. Procédé servant à mettre en oeuvre une réaction fortement exothermique, **caractérisé en ce que** la réaction est réalisée dans les fentes comprenant un catalyseur solide entre les tôles thermiques d'un réacteur tel qu'il est défini dans l'une quelconque des revendications 1 à 14.

16. Procédé selon la revendication 15, **caractérisé en ce qu'**il s'agit d'une conversion CO, de l'époxydation d'oléfines aux fins de la fabrication d'oxyde d'oléfine, d'une hydratation sélective d'hydrocarbures, par exemple de C₂H₂ pour du C₂H₄, d'une hydratation non sélective d'hydrocarbures, par exemple de C₂H₄ pour du C₂H₆, d'une synthèse de méthane, d'une synthèse de méthanol, d'une réaction Claus, d'une oxydation directe de H₂S pour obtenir du soufre élémentaire, d'une synthèse Fischer-Tropsch, d'une oxydation de SO₂ pour obtenir du SO₃ ou d'une synthèse de NH₃.

17. Procédé servant à remplir un réacteur comprenant des tôles thermiques avec un catalyseur hétérogène, dans le cadre duquel un catalyseur hétérogène est mis en place entre les tôles thermiques, **caractérisé en ce que** le réacteur est un réacteur selon l'une quelconque des revendications 1 à 14.

18. Procédé selon la revendication 17, **caractérisé en ce que** le catalyseur est un matériau particulaire hétérogène, et **en ce que** le matériau particulaire hétérogène est introduit par des flexibles, qui mènent jusqu'à proximité de la surface respective de l'écoulement de catalyseur, dans la chambre intermédiaire entre les deux tôles thermiques.

19. Procédé selon la revendication 17, **caractérisé en ce que** le catalyseur est un matériau particulaire hétérogène, qu'un câble est introduit entre les tôles thermiques, lequel parvient de manière transversale sur toute la largeur d'un canal d'écoulement, **en ce que** le câble est descendu à une profondeur ne présentant aucun risque d'endommagement pour les particules de catalyseur, et **en ce qu'**après l'opération consistant à remplir avec le catalyseur le câble est retiré latéralement de l'écoulement de catalyseur, lorsque l'écoulement de catalyseur a atteint une certaine hauteur appropriée.

20. Procédé selon l'une quelconque des revendications 17 à 19, **caractérisé en ce que** le réacteur présente des modules de tôles thermiques, et **en ce que** les modules de tôles thermiques sont remplis avec le catalyseur en dehors du réacteur et sont intégrés dans le réacteur après le remplissage.
